# EUROPÄISCHE PATENTANMELDUNG

(11) **EP 3 680 050 A2**
(43) Veröffentlichungstag der Anmeldung: **15.07.2020**
(21) Anmeldenummer: 19206802.1
(22) Anmeldetag: 04.11.2019
(51) Int. Cl.: B23K 11/11

(54) **VERFAHREN ZUM ÜBERPRÜFEN EINER SCHWEISSZANGE ZUM WIDERSTANDSSCHWEISSEN VON WERKSTÜCKEN**

(30) Priorität: 10.01.2019 DE 102019200199
(71) Anmelder: Robert Bosch GmbH, 70442 Stuttgart (DE)
(72) Erfinder: Haeufgloeckner, Juergen, 63936 Schneeberg (DE); Stolze, Josephine, 69412 Eberbach (DE)

(57) **Zusammenfassung**

Die Erfindung betrifft Verfahren zum Überprüfen einer Schweißzange zum Widerstandsschweißen von Werkstücken, wobei im Zuge eines Schweißprozesses Schweißelektroden der Schweißzange mit Hilfe eines Elektrodenantriebs mit einer Elektrodenkraft gegen einen Schweißpunkt der Werkstücke gepresst werden und mit einem Schweißstrom bestromt werden (201), wobei während des Schweißprozesses (201) ein zeitlicher Verlauf wenigstens eines Antriebsparameters des Elektrodenantriebs bestimmt wird (202), aus dem zeitlichen Verlauf des wenigstens einen Antriebsparameters wenigstens ein Kennwert bestimmt wird (203), der wenigstens eine Kennwert mit wenigstens einem Referenzwert verglichen wird (204) und basierend auf einem Vergleichsergebnis eine mechanische Ausrichtung der Schweißelektroden zueinander bewertet wird (205, 206).

## Beschreibung

Die vorliegende Erfindung betrifft ein Verfahren zum Überprüfen einer Schweißzange zum Widerstandsschweißen von Werkstücken sowie eine Steuereinheit, ein Schweißgerät und ein Computerprogramm zu dessen Durchführung.

### Stand der Technik

Mittels Schweißprozessen wie beispielsweise dem Widerstandsschweißen können Werkstücke stoffschlüssig miteinander verbunden werden. Beispielsweise werden im Zuge des automatisierten Karosserierohbaus durch robotergeführte Schweißzangen unterschiedliche Werkstücke, z.B. Bleche, mittels Widerstandsschweißen miteinander verbunden.

Im Zuge des Widerstandsschweißens werden zunächst im Zuge einer sogenannten. Kraftaufbauphase zwei Schweißelektroden einer Schweißzange mit Hilfe eines Elektrodenantriebs gegen einen Schweißpunkt der Werkstücke gepresst bis eine vorgegebene Elektrodenkraft erreicht ist. Anschließend werden die Schweißelektroden für die Dauer einer Schweißzeit mit einem Schweißstrom bestromt werden, wodurch eine Widerstandserwärmung der beiden zu verschweißenden Werkstücke zwischen den Schweißelektroden erfolgt und die Werkstücke bis zum Erreichen einer erforderlichen Schweißtemperatur erhitzt werden.

### Offenbarung der Erfindung

Erfindungsgemäß werden ein Verfahren zum Überprüfen einer Schweißzange zum Widerstandsschweißen von Werkstücken sowie eine Steuereinheit, ein Schweißgerät und ein Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Im Zuge eines Schweißprozesses zum Widerstandsschweißen werden Schweißelektroden der Schweißzange mit Hilfe eines Elektrodenantriebs mit einer Elektrodenkraft gegen einen Schweißpunkt der Werkstücke gepresst und mit einem Schweißstrom bestromt. Im Rahmen des vorliegenden Verfahrens wird während des Schweißprozesses ein zeitlicher Verlauf wenigstens eines Antriebsparameters des Elektrodenantriebs bestimmt. Aus dem zeitlichen Verlauf des wenigstens einen Antriebsparameters wird wenigstens ein Kennwert bestimmt. Der wenigstens eine Kennwert wird mit wenigstens einem Referenzwert verglichen und basierend auf einem Vergleichsergebnis wird eine mechanische Ausrichtung der Schweißelektroden zueinander bewertet.

Als mechanische Ausrichtung der Schweißelektroden sei in diesem Zusammenhang insbesondere zu verstehen, wie die Schweißelektroden, insbesondere die Elektrodenkappen und/oder die Schäfte der Schweißelektroden, relativ zueinander und/oder relativ zu dem Schweißpunkt bzw. den Werkstücken orientiert sind. Für eine bestmögliche Qualität des Schweißprozesses bzw. der erzeugten Schweißverbindung sollten die Schweißelektroden während des Schweißvorgangs insbesondere koaxial ausgerichtet sein, so dass eine Verbindungsgerade der Berührungspunkte der jeweiligen Schweißelektrode mit dem zugehörigen Werkstück in Richtung der Elektrodenkraft liegt und insbesondere jeweils senkrecht auf das jeweilige Werkstück gerichtet ist. Wenn dies nicht der Fall ist, wenn die Schweißelektroden also nicht korrekt ausgerichtet sind, beispielsweise aufgrund einer Schiefstellung einer oder beider Schweißelektroden bzw. aufgrund einer lateralen Verschiebung der Elektrodenschäfte relativ zueinander, kann dies die Qualität des Schweißprozesses negativ beeinflussen und es kann insbesondere zu unerwünschten Schweißspritzern kommen. Schweißspritzer sind als Tropfen geschmolzenen Metalls zu verstehen, die aufgrund der extremen Intensität von Hitze und Kraft, die an oder um den Schweißpunkt herum aufgebracht werden, ausbrechen. Derartige Schweißspritzer führen zu einer Verschmutzung der Werkstückoberflächen und den Oberflächen des Schweißgeräts selbst.

Aufgrund der hohen auf Schweißzangen wirkenden Belastungen oder auch aufgrund von Verschleißerscheinungen kann es im Laufe der Lebensdauer einer Schweißzange immer wieder dazu kommen, dass sich ihre Schweißelektroden relativ zueinander verschieben und es zu einer ungünstigen Ausrichtung kommt. Ferner kann beispielsweise auch bei einer erstmaligen Inbetriebnahme der Schweißzange nicht notwendigerweise davon ausgegangen werden, dass die Schweißelektroden mechanisch korrekt ausgerichtet sind.

Durch das vorliegende Verfahren wird nun eine Möglichkeit bereitgestellt, um die Ausrichtung der Schweißelektroden relativ zueinander online während des Schweißprozesses zu überwachen und insbesondere eine ungünstige Ausrichtung zu erkennen, die zu negativen Einflüssen auf die Schweißprozessqualität führen kann. Die Schweißzange kann somit während des Schweißprozesses auf mechanische Stabilität hin überprüft werden. Die wenigstens eine Kenngröße ermöglicht zweckmäßigerweise eine qualitative Bewertung der Ausrichtung der Schweißelektroden und lässt insbesondere Rückschlüsse zu, ob die Schweißelektroden derart ausgerichtet sind, dass eine bestmögliche Qualität des Schweißprozesses erreicht werden kann.

Im Rahmen der vorliegenden Erfindung wurde insbesondere erkannt, dass sich der zeitliche Verlauf von Antriebsparametern und spezielle daraus bestimmbare Kennwerte besonders eignen, um auf die Ausrichtung der Schweißelektroden rückzuschließen. Insbesondere wurde erkannt, dass sich der zeitliche Verlauf von Antriebsparametern und somit die daraus bestimmbaren Kennwerte bei optimal ausgerichteten und bei ungünstig ausgerichteten Schweißelektroden voneinander unterscheiden. Als ein Antriebsparameter sei in diesem Zusammenhang insbesondere eine Größe bzw. ein Parameter zu verstehen, welcher im Zuge einer Regelung bzw. Steuerung des Elektrodenantriebs bestimmt wird, um die Schweißelektroden auf vorgegebene Weise zu bewegen und gegen die Werkstücke zu pressen. Insbesondere charakterisiert der Antriebsparameter eine aktuelle Lage bzw. Position oder Bewegung der Schweißelektroden.

Vorteilhafterweise wird basierend auf dem Vergleichsergebnis bewertet, ob die Schweißelektroden korrekt ausgerichtet sind. Durch den Vergleich der wenigstens einen Kenngröße mit dem wenigstens einen Referenzwert wird insbesondere bewertet, ob die Schweißelektroden korrekt ausgerichtet sind und somit insbesondere die Werkstücke deckungsgleich berühren oder nicht. Entsprechend kann somit insbesondere erkannt werden, wenn die Schweißelektroden nicht korrekt ausgerichtet sind, beispielsweise aufgrund einer Schiefstellung einer oder beider Schweißelektroden oder aufgrund einer lateralen Verschiebung der Schweißelektroden zueinander.

Wenn bewertet wird, dass die Schweißelektroden nicht korrekt ausgerichtet sind, wird vorteilhafterweise eine vorgegebene Maßnahme durchgeführt. Da durch eine derartige nicht korrekte Ausrichtung die Qualität des Schweißprozesses und der erzeugten Schweißverbindung negativ beeinflusst werden kann, wird durch die Maßnahme insbesondere einer derartigen Verminderung der Qualität entgegengewirkt. Beispielsweise kann als Maßnahme eine Fehlernachricht an einen Benutzer der Schweißzange ausgegeben werden. Ebenso ist es denkbar, als Maßnahme den Schweißprozess abzubrechen, um eine etwaige Beschädigung der Werkstücke oder der Schweißzange zu verhindern. Vorzugsweise wird als Maßnahme ein Nachjustieren der Schweißelektroden durchgeführt oder veranlasst, so dass die Schweißelektroden korrekt ausgerichtet werden.

Vorzugsweise gibt der wenigstens eine Referenzwert wenigstens einen zulässigen Wertebereich bzw. Toleranzbereich für den wenigstens einen Kennwert vor. Insbesondere werden somit Werte- bzw. Toleranzbereiche definiert, in welchen sich ein entsprechender Kennwert bei optimal ausgerichteten Schweißelektroden bewegt. Wenn der entsprechende bestimmte Kennwert außerhalb eines derartigen Wertebereichs liegt, wird insbesondere auf eine nicht korrekte Ausrichtung der Schweißelektroden rückgeschlossen. Alternativ oder zusätzlich kann der wenigstens eine Referenzwert vorzugsweise auch einen Schwellwert für den wenigstens einen Kennwert vorgeben. Bei Erreichen dieses Schwellwerts kann insbesondere auf eine nicht korrekte Schweißelektrodenausrichtung rückgeschlossen werden. Beispielsweise können diese Wertebereiche bzw. Schwellwerte auch zeitabhängig sein und beispielsweise von der bisher abgelaufenen Schweißzeit abhängen. So können beispielsweise für einen speziellen Kennwert für unterschiedliche Phasen während des Widerstandsschweißens verschiedene Referenzwerte und somit verschiedene Wertebereiche bzw. Schwellwerte gelten.

Vorteilhafterweise wird als der wenigstens eine Kennwert eine Steigung und/oder ein Maximalwert und/oder ein Minimalwert des zeitlichen Verlaufs des wenigstens einen Antriebsparameters oder zumindest eines Bereichs des zeitlichen Verlaufs des wenigstens einen Antriebsparameters bestimmt. Derartige Kennwerte liegen für eine mechanisch stabile Schweißzange mit korrekt ausgerichteten Schweißelektroden insbesondere in einem definierten Toleranz- bzw. Wertebereich. Eine falsche Justierung der Schweißzange mit nicht korrekt ausgerichteten Schweißelektroden kann somit insbesondere über einen Vergleich dieser Kennwerte mit dem entsprechenden durch die Referenzwerte vorgegebenen zulässigen Wertebereich erkannt werden. Insbesondere können für verschiedene Bereiche bzw. Abschnitte des zeitlichen Verlaufs jeweils Werte der Steigung, des Maximalwert und/oder des Minimalwerts als Kennwert bestimmt werden. Beispielsweise können diese verschiedenen Bereiche des zeitlichen Verlaufs in Abhängigkeit von der bisher abgelaufenen Schweißzeit vorgegeben werden oder insbesondere unterschiedlichen Phasen während Widerstandsschweißens entsprechen.

Gemäß einer bevorzugten Ausführungsform wird der zeitliche Verlauf eines Lageistwerts als der wenigstens eine Antriebsparameter bestimmt. Als Lageistwert sei insbesondere die aktuelle Lage bzw. Position einer oder beider Schweißelektroden zu verstehen, welche durch einen Lageistwert eines die Elektroden öffnenden und schließenden Antriebs gegeben sein kann. Beispielsweise kann der Lageistwert relativ zu dem Schweißpunkt bzw. den Werkstücken bestimmt werden oder zweckmäßigerweise auch in Relation zu einem Referenzpunkt des Schweißgeräts, insbesondere zu einer Ruhelage der Schweißelektroden. Insbesondere charakterisiert die Lage bzw. der Lageistwert die Position der Elektrodenkappen im Raum. Ferner wird insbesondere nur eine Achse betrachtet, zweckmäßigerweise eine Achse in Bewegungsrichtung der Elektroden. Der Lageistwert stellt einen besonders vorteilhaften Antriebsparameter für die Bewertung der Schweißelektrodenausrichtung dar. Alternativ oder zusätzlich können auch zeitliche Verläufe weiterer Antriebsparameter bestimmt werden, bevorzugt eines Drehmomentistwerts und/oder eines Drehzahlistwerts und/oder eines Drehzahlsollwerts und/oder eines drehmomentbildenden Stroms und/oder eines Beschleunigungsistwerts und/oder einer Zangenschließgeschwindigkeit des Elektrodenantriebs.

Vorzugsweise wird der wenigstens eine Referenzwert bestimmt, indem ein Referenzschweißprozess an einem definierten Referenzwerkstück durchgeführt und ausgewertet wird. Insbesondere werden für diesen Referenzschweißprozess die Schweißelektroden korrekt ausgerichtet und der Referenzschweißprozess zweckmäßigerweise mit vorgegebenen Werten für Schweißparameter wie Schweißstrom, Elektrodenkraft und Schweißzeit durchgeführt, um Referenzwerte zu erlernen, die für einen mit bestmöglicher Qualität durchgeführten Schweißprozess typisch sind. Zweckmäßigerweise werden die zeitlichen Verläufe der entsprechenden Antriebsparameter während des Referenzschweißprozesses als Referenzzeitverläufe bestimmt und aus diesen Referenzzeitverläufen bestimmte Kennwerte werden insbesondere als entsprechende Referenzwerte bestimmt. Der Referenzschweißprozess kann beispielsweise während bzw. am Ende eines Herstellungsprozesses der Schweißzange durchgeführt werden oder beispielsweise auch, nachdem die Schweißzange bereits in Betrieb genommen wurde. Insbesondere ist es denkbar, einen derartigen Referenzschweißprozess während des regulären Betriebs der Schweißzange in vorgegebenen Zeitintervallen zu wiederholen, zweckmäßigerweise um regelmäßig aktuelle die Schweißzange charakterisierende Referenzwerte zu erlernen.

Alternativ oder zusätzlich kann der wenigstens eine Referenzwert vorzugsweise bestimmt werden, indem eine Vielzahl von Schweißprozessen durchgeführt und ausgewertet wird. Insbesondere wird zu diesem Zweck eine Vielzahl von regulären Schweißprozessen ausgewertet wird, die im Zuge des regulären Betriebs der Schweißzange durchgeführt werden. Im Zuge dieser Schweißprozess werden jeweils zweckmäßigerweise die zeitlichen Verläufe der jeweiligen Antriebsparameter bestimmt und daraus werden entsprechende Kennwerte bestimmt. Aus dieser Vielzahl von Kennwerten wird zweckmäßigerweise ein repräsentativer Wert als Referenzwert ausgewählt. Beispielsweise kann dieser repräsentative Wert mittels statistischer Methoden ausgewählt werden, etwa als ein statistischer Mittelwert. Wenn die Schweißelektroden symmetrisch ausgerichtet sind, streut diese Vielzahl von Kennwerten insbesondere wenig oder kaum. Liegt hingegen eine große Streuung dieser verschiedenen Kennwerte vor, deutet dies insbesondere auf eine nicht korrekte Ausrichtung der Schweißelektroden hin, so dass zweckmäßigerweise zunächst eine Nachjustierung der Schweißelektroden vorgenommen wird, bevor Referenzwerte bestimmt werden.

Besonders vorteilhaft eignet sich das Verfahren für den Karosserierohbau, insbesondere für automatisierte Schweißprozesse im Karosserierohbau, vorzugsweise im Zuge einer Fahrzeugproduktion. Insbesondere werden dabei Bleche miteinander verschweißt, um die Karosserie eines Fahrzeugs herzustellen. Im Zuge des Herstellungsprozesses einer einzigen Karosserie können bis zu mehrere tausend Schweißpunkte (z.B. ca. 5.000 Schweißpunkte für ein Mittelklasse-Fahrzeug) automatisiert bearbeitet werden. Durch das Verfahren können die einzelnen Schweißpunkte mit bestmöglicher Qualität verschweißt werden.

Zur Herstellung von Fahrzeugkarosserien werden oftmals mehrere hundert verschiedener Schweißzangen eingesetzt. So werden beispielsweise für die Produktion der Karosserie eines Mittelklasse-Fahrzeugs bis zu 100 verschiedene Zangentypen eingesetzt und die Gesamtzahl an verwendeten Schweißzangen kann sich auf bis zu 400 Stück belaufen. Eine Überprüfung einer derartigen Vielzahl von Schweißzangen auf korrekte Ausrichtung ist auf herkömmliche Weise mit erheblichem Aufwand verbunden. Durch das vorliegende Verfahren können die einzelnen Schweißzangen insbesondere automatisiert online während des regulären Produktionsbetriebs ohne Mehraufwand überwacht werden und nicht korrekt ausgerichtete Schweißzangen können automatisch erkannt werden.

Eine erfindungsgemäße Steuereinheit (Recheneinheit), z.B. eine Schweißsteuerung eines Schweißgeräts, ist, insbesondere programmtechnisch, dazu eingerichtet, ein erfindungsgemäßes Verfahren durchzuführen. Die Steuereinheit bzw. Schweißsteuerung kann beispielsweise als SPS (speicherprogrammierbare Steuerung), als NC (Numerical Control) oder CNC (Computerised Numerical Control) ausgebildet sein.

Ein erfindungsgemäßes Schweißgerät zum Widerstandsschweißen weist insbesondere eine Schweißzange mit Schweißelektroden sowie einen Elektrodenantrieb zum Bewegen der Schweißelektroden auf. Ferner umfasst das Schweißgerät eine bevorzugte Ausgestaltung einer erfindungsgemäßen Steuereinheit.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

- Fig. 1: zeigt schematisch bevorzugte Ausgestaltungen eines erfindungsgemäßen Schweißgeräts, welche jeweils dazu eingerichtet sind, eine bevorzugte Ausführungsform eines erfindungsgemäßen Verfahrens durchzuführen.
- Fig. 2: zeigt schematisch eine bevorzugte Ausführungsform eines erfindungsgemäßen Verfahrens als ein Blockdiagramm.
- Fig. 3: zeigt schematisch einen zeitlichen Verlauf eines Lageistwerts eines Elektrodenantriebs eines Schweißgeräts, der im Zuge einer bevorzugten Ausführungsform eines erfindungsgemäßen Verfahrens bestimmt werden kann.
- Fig. 4: zeigt schematisch einen zeitlichen Verlauf eines Lageistwerts eines Elektrodenantriebs eines Schweißgeräts, der im Zuge einer bevorzugten Ausführungsform eines erfindungsgemäßen Verfahrens bestimmt werden kann.

### Detaillierte Beschreibung der Zeichnung

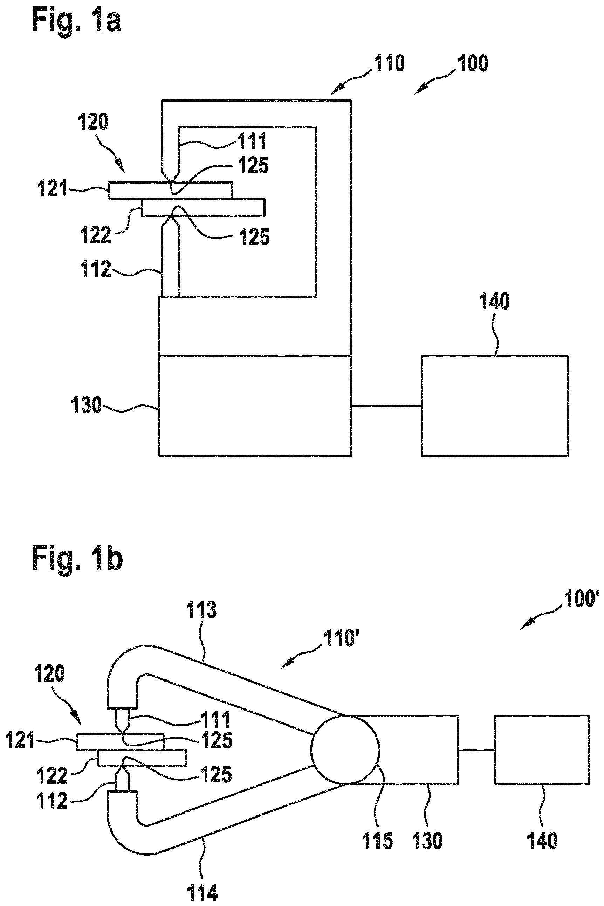

In den Figuren 1a und 1b ist jeweils ein Schweißgerät zum Widerstandsschweißen schematisch dargestellt und mit 100 bzw. 100' bezeichnet. Identische Bezugszeichen in den Figuren 1a und 1b bezeichnen gleiche oder baugleiche Elemente.

Mit den Schweißgeräten 100 bzw. 100' können jeweils Werkstücke 120 durch Widerstandsschweißen miteinander stoffschlüssig verbunden werden. Insbesondere werden die Werkstücke 120 im Zuge eines Karosserierohbaus miteinander verschweißt, wobei insbesondere eine Karosserie eines Kraftfahrzeugs hergestellt wird. Als Werkstücke werden hier beispielsweise zwei Bleche 121 und 122 aus Aluminium miteinander verschweißt.

Die Schweißgeräte 100 bzw. 100' weisen jeweils eine Schweißzange 110 bzw. 110' mit je zwei Schweißelektroden 111 und 112 auf. Ein Elektrodenantrieb 130 ist vorgesehen, um die Schweißelektroden 111, 112 relativ zueinander zu bewegen. Beispielsweise kann der Elektrodenantrieb 130 pneumatisch, servo-pneumatisch oder servo-elektrisch ausgebildet sein.

Die Schweißgeräte 100, 100' weisen ferner jeweils eine Steuereinheit (Schweißsteuerung) 140 auf, welche beispielsweise jeweils als SPS (speicherprogrammierbare Steuerung) ausgebildet sein kann und jeweils dazu eingerichtet, den jeweiligen Elektrodenantrieb 130 und den jeweiligen Schweißprozess zu regeln.

In Figur 1a ist die Schweißzange 110 als eine sog. C-Schweißzange ausgeführt, bei welcher insbesondere eine eindimensionale Bewegung einer der Schweißelektroden 111 und 112 erfolgt, d.h. eine der Schweißelektroden wird mit Hilfe des Elektrodenantriebs 130 entlang ihrer Haupterstreckungsrichtung (Achse) verschoben.

In Figur 1b ist die Schweißzange 110' als eine sog. X-Schweißzange ausgeführt, bei welcher insbesondere eine rotierende Bewegung der jeweiligen Schweißelektroden 111 und 112 erfolgt. Diese rotierende Bewegung wird insbesondere erzeugt, indem Schäfte 113, 114, an deren Enden jeweils die Schweißelektroden 111, 112 angeordnet sind, um einen Schwenkpunkt 115 geschwenkt werden. Auch bei einer derartigen X-Schweißzange 110' ist es denkbar, nur eine der beiden Schweißelektroden 111, 112 bzw. nur einen der beiden Schäfte 113, 114 beweglich und die andere Elektrode bzw. den anderen Schaft starr auszubilden.

Im Zuge des Widerstandsschweißens werden sowohl mit der C-Schweißzange 110 als auch mit der X-Schweißzange 110' die jeweiligen Schweißelektroden 111 und 112 während einer sog. Kraftaufbauphase mit Hilfe des jeweiligen Elektrodenantriebs 130 mit einer Elektrodenkraft an einem jeweiligen Schweißpunkt 125 gegen die Bleche 121 und 122 gedrückt. Anschließend werden die Schweißelektroden 111 und 112 während des eigentlichen Schweißprozesses für die Dauer einer Schweißzeit mit einem Schweißstrom bestromt, wodurch eine Widerstandserwärmung der Bleche 121 und 122 am Schweißpunkt 125 erfolgt.

Für die Qualität des Schweißprozesses ist es dabei von Bedeutung, dass die Schweißelektroden 111, 112 die Werkstücke 121, 122 an dem Schweißpunkt 125 deckungsgleich berühren und insbesondere jeweils senkrecht auf das jeweilige Werkstück 121 bzw. 122 gerichtet sind, da es sonst zu unerwünschten Schweißspritzern kommen kann, welche zu Verschmutzungen der Oberflächen der Werkstücke 120 oder auch des Schweißgeräts 100 bzw. 100' selbst führen können. Sowohl bei der C-Schweißzange 110 als auch bei der X-Schweißzange 110' ist es von Bedeutung, dass die jeweiligen Schweißelektroden 111, 112 korrekt zueinander ausgerichtet sind, insbesondere koaxial.

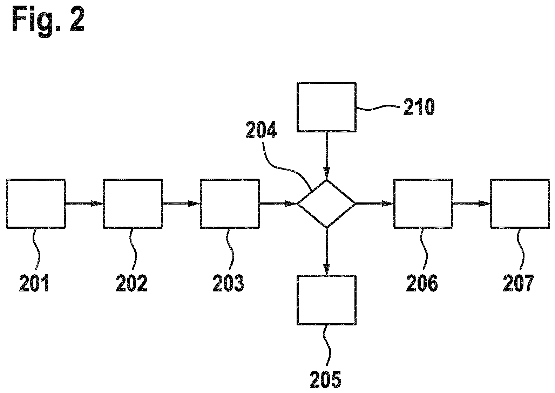

Um die Ausrichtung der Schweißelektroden 111, 112 der jeweiligen Schweißzange 110 bzw. 110' zu überprüfen, ist die jeweilige Steuereinheit 140 ferner, insbesondere programmtechnisch, dazu eingerichtet, eine bevorzugte Ausführungsform eines erfindungsgemäßen Verfahrens durchzuführen, welche in Figur 2 schematisch als ein Blockdiagramm dargestellt ist und nachfolgend in Bezug auf die Figuren 1 und 2 erläutert wird.

Die nachfolgende Beschreibung bezieht sich insbesondere auf das in Figur 1a gezeigte Schweißgerät 100 mit der C-Schweißzange 110, soll jedoch in entsprechender Weise analog für das in Figur 1b gezeigte Schweißgerät 100' mit der X-Schweißzange 110' gelten.

In einem Schritt 201 wird mit dem Schweißgeräten 100 ein regulärer Widerstandsschweißprozess der Werkstücke 120 durchgeführt, im Zuge dessen die Schweißelektroden 111, 112 zunächst mit Hilfe des Elektrodenantriebs 130 gegen die Bleche 121 und 122 gedrückt werden, dann mit dem Schweißstrom bestromt werden und zuletzt mit Hilfe des Elektrodenantriebs 130 wieder von den Werkstücke 120 wegbewegt werden.

Während dieses Schweißprozess wird gemäß Schritt 202 ein zeitlicher Verlauf wenigstens eines Antriebsparameters des Elektrodenantriebs 130 bestimmt, beispielsweise ein zeitlicher Verlauf eines Lageistwerts einer der Schweißelektroden 111, 112. Insbesondere wird hierzu ein Lageistwert des Elektrodenantriebs, d.h. des beweglichen Antriebsteils (z.B. Kolben, Schlitten, Rotor usw.) verwendet.

In Schritt 203 wird aus dem zeitlichen Verlauf des wenigstens einen Antriebsparameters wenigstens ein Kennwert bestimmt. Beispielsweise werden als derartige Kennwerte Steigungen von verschiedenen Bereichen des zeitlichen Verlaufs des Lageistwerts bestimmt.

Zu diesem Zweck kann der zeitliche Verlauf des Lageistwerts beispielsweise derart in verschiedene Bereiche bzw. Abschnitte unterteilt werden, so dass der zeitliche Verlauf in jedem dieser Bereiche jeweils linear oder zumindest im Wesentlichen linear jeweils mit konstanter oder zumindest im Wesentlichen konstanter Steigung verläuft. In jedem dieser Abschnitte wird die jeweilige Steigung als Kennwert bestimmt. Zeitlich entsprechen diese Abschnitte insbesondere wenigstens einer Kraftaufbauphase, wenigstens einer Vorhaltephase, wenigstens einer Stromphase und wenigstens einer Nachhaltephase.

In Schritt 204 wird jeder dieser bestimmten Kennwerte, also jede der bestimmten Steigungen, mit wenigstens einem Referenzwert verglichen, insbesondere jeweils mit zwei Referenzwerten, welche für die jeweilige Steigung einen zulässigen Wertebereich vorgeben. Somit wird in Schritt 204 insbesondere überprüft, ob die einzelnen in Schritt 203 bestimmten Steigungen jeweils innerhalb eines zulässigen Werte- bzw. Toleranzbereichs liegen.

Für eine Schweißzange 110 mit koaxial ausgerichteten Elektroden 111, 112 ergibt sich während des Schweißprozesses insbesondere ein charakteristischer Verlauf des Lageistwerts, welcher in charakteristischen Abschnitten jeweils charakteristische Steigungen aufweist. Die Referenzwerte definieren insbesondere Werte- bzw. Toleranzbereiche um diese einzelnen charakteristischen Steigungen herum, innerhalb welcher die entsprechenden Steigungen bei einer koaxial ausgerichteten Schweißzange 110 typischerweise liegen.

Beispielsweise können diese Referenzwerte und somit die entsprechenden Wertebereiche im Zuge eines Referenzschweißprozesses erlernt werden, welcher beispielsweise mit der Schweißzange 110 an einem definierten Referenzwerkstück durchgeführt wird. Beispielsweise kann dieser Referenzschweißprozess, angedeutet durch Bezugszeichen 210, vor einer Inbetriebnahme der Schweißzange 110 durchgeführt worden sein oder beispielsweise auch während des regulären Betriebs der Schweißzange 110 in regelmäßigen Zeitintervallen wiederholt werden.

Wenn nun die in Schritt 203 bestimmten Steigungen jeweils innerhalb ihrer jeweiligen zulässigen Wertebereiche liegen, wird in Schritt 205 bewertet, dass die Schweißelektroden 111, 112 koaxial ausgerichtet sind.

Liegt hingegen zumindest eine der in Schritt 203 bestimmten Steigungen nicht innerhalb des jeweiligen zulässigen Wertebereichs, wird in Schritt 206 bewertet, dass die Schweißelektroden 111, 112 nicht koaxial ausgerichtet sind. In diesem Fall wird in Schritt 207 eine vorgegebene Maßnahme durchgeführt, insbesondere eine Nachjustierung der Schweißzange 110.

Es sei an dieser Stelle angemerkt, dass sich für C-Schweißzangen 110 und für X-Schweißzangen 110' jeweils unterschiedliche, zangenspezifische zeitliche Verläufe von Antriebsparametern und Kennwerten ergeben können und somit insbesondere für den jeweiligen Zangentyp spezifische Referenzwerte gelten können, welche jedoch im Zuge der entsprechenden Referenzschweißprozesse spezifisch erlernt werden.

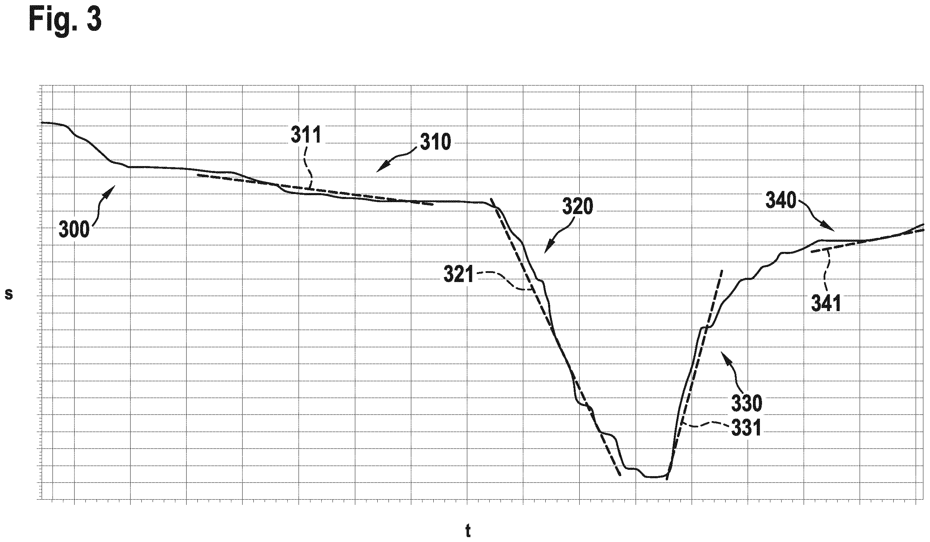

Figur 3 zeigt schematisch ein Diagramm des Lageistwerts s des Elektrodenantriebs 130 aufgetragen gegen die Zeit t. Die Kurve 300 stellt beispielsweise einen zeitlichen Verlauf des Lageistwerts bei koaxial ausgerichteten Schweißelektroden 111, 112 dar. Beispielsweise wird in einem ersten Bereich 310 des zeitlichen Verlaufs 300 die Steigung einer Ausgleichsgeraden 311 als ein erster Kennwert bestimmt. Der erste Bereich 310 ist die sog. Vorhaltephase, während welcher die Schweißelektroden 111, 112 mit der Elektrodenkraft vor Beginn des Schweißprozesses gegen die Schweißpunkte 125 der Werkstücke 121, 122 gepresst werden, aber noch nicht mit dem Schweißstrom bestromt werden.

In einem zweiten Bereich 320 wird beispielsweise die Steigung einer Ausgleichsgeraden 321 als ein zweiter Kennwert bestimmt. Der zweite Bereich ist die Stromphase, während welcher die Schweißelektroden 111, 112 für die Dauer der Schweißzeit mit dem Schweißstrom bestromt werden.

Entsprechend werden in einem dritten Bereich 330 und in einem vierten Bereich 340 die Steigungen entsprechender Ausgleichsgeraden 331 und 341 als ein dritter Kennwert und ein vierter Kennwert bestimmt. Nach dem Ende der Schweißzeit und nachdem die Bestromung der Schweißelektroden 111, 112 beendet wurde, beginnt die sog. Nachhaltephase, während welcher die Schweißelektroden 111, 112 noch mit der Elektrodenkraft gegen den Schweißpunkt 125 der Werkstücke 121, 122 gepresst, aber nicht mehr mit dem Schweißstrom bestromt werden. Während dieser Nachhaltephase werden im vorliegenden Beispiel der dritte und der vierte Kennwert bestimmt, wobei der dritte Kennwert die Steigung unmittelbar nach Ende der Bestromung und der vierte Kennwert die Steigung nach dem Verfestigen der Verbindung ist.

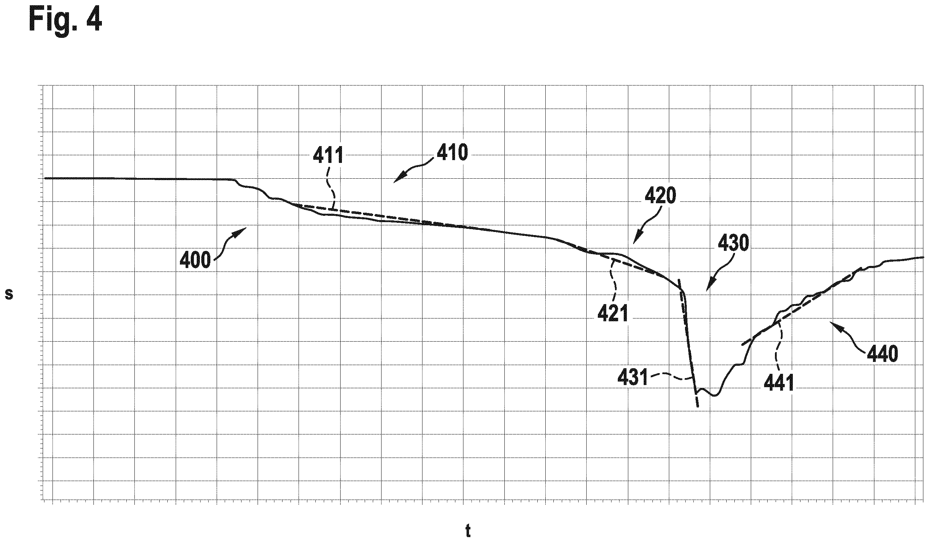

Figur 4 zeigt analog zu Figur 3 schematisch ein Diagramm des Lageistwerts s des Elektrodenantriebs 130 aufgetragen gegen die Zeit t. Die Kurve 400 stellt beispielsweise einen zeitlichen Verlauf des Lageistwerts bei nicht koaxial ausgerichteten Schweißelektroden 111, 112 dar. Auch in diesem Fall wird beispielsweise in einem ersten Bereich 410 die Steigung einer Ausgleichsgeraden 411 als ein erster Kennwert bestimmt, in einem zweiten Bereich 420 die Steigung einer Ausgleichsgeraden 421 als ein zweiter Kennwert, in einem dritten Bereich 430 die Steigung einer Ausgleichsgeraden 431 als ein dritter Kennwert und in einem vierten Bereich 440 die Steigung einer Ausgleichsgeraden 441 als ein vierter Kennwert.

Wie anhand der Figuren 3 und 4 zu erkennen ist, unterscheidet sich der zeitliche Verlauf 300 des Lageistwerts von koaxial ausgerichteten Schweißelektroden deutlich von dem zeitlichen Vergleich 400 von nicht koaxial ausgerichteten Schweißelektroden. Insbesondere treten im zweiten Fall in der Stromphase und in der Nachhaltephase deutlich unterschiedliche Steigungen auf, womit eine klare Unterscheidung der beiden Zustände möglich ist. Insbesondere ist der Anstieg in der Nachhaltephase auch deutlich flacher als in Figur 3.

Die Steigung der Geraden 321, also der zweite Kennwert der Kurve 300, ist beispielsweise betragsmäßig deutlich größer als der zweite Kennwert der Kurve 400, also die Steigung der Gerade 421. Ferner besitzt der dritte Kennwert der Kurve 300 beispielsweise ein positives Vorzeichen, da die Gerade 331 eine positive Steigung besitzt. Im Gegensatz dazu besitzt die Ausgleichsgerade 431 der Kurve 400 eine negative Steigung und entsprechend besitzt der dritte Kennwert der Kurve 400 ein negatives Vorzeichen.

Der zeitliche Verlauf des Lageistwerts und dessen Steigungen stellen somit eine besonders effektive Möglichkeit dar, um im Rahmen des vorliegenden Verfahrens eine Ausrichtung der Schweißelektroden einer Schweißzange bewerten zu können.

## Patentansprüche

1. Verfahren zum Überprüfen einer Schweißzange (110, 100') zum Widerstandsschweißen von Werkstücken (121, 122), wobei im Zuge eines Schweißprozesses Schweißelektroden (111, 112) der Schweißzange (110, 100') mit Hilfe eines Elektrodenantriebs (130) mit einer Elektrodenkraft gegen einen Schweißpunkt (125) der Werkstücke (121, 122) gepresst werden und mit einem Schweißstrom bestromt werden (201), wobei während des Schweißprozesses (201) ein zeitlicher Verlauf (300, 400) wenigstens eines Antriebsparameters des Elektrodenantriebs (130) bestimmt wird (202), aus dem zeitlichen Verlauf (300, 400) des wenigstens einen Antriebsparameters wenigstens ein Kennwert bestimmt wird (203), der wenigstens eine Kennwert mit wenigstens einem Referenzwert verglichen wird (204) und basierend auf einem Vergleichsergebnis eine mechanische Ausrichtung der Schweißelektroden (111, 112) zueinander bewertet wird (205, 206).

2. Verfahren nach Anspruch 1, wobei basierend auf dem Vergleichsergebnis bewertet wird, ob die Schweißelektroden (111, 112) korrekt ausgerichtet sind (205).

3. Verfahren nach Anspruch 2, wobei, wenn bewertet wird, dass die Schweißelektroden (111, 112) nicht korrekt ausgerichtet sind (206), eine vorgegebene Maßnahme durchgeführt wird (207), insbesondere ein Nachjustieren der Schweißelektroden (111, 112).

4. Verfahren nach einem der vorstehenden Ansprüche, wobei der wenigstens eine Referenzwert wenigstens einen zulässigen Wertebereich und/oder wenigstens einen Schwellwert für den wenigstens einen Kennwert vorgibt.

5. Verfahren nach einem der vorstehenden Ansprüche, wobei eine Steigung und/oder ein Maximalwert und/oder ein Minimalwert des zeitlichen Verlaufs (300, 400) des wenigstens einen Antriebsparameters oder zumindest eines Bereichs (310, 320, 330, 340, 410, 420, 430, 440) des zeitlichen Verlaufs (300, 400) des wenigstens einen Antriebsparameters als der wenigstens eine Kennwert bestimmt werden (203).

6. Verfahren nach einem der vorstehenden Ansprüche, wobei der zeitliche Verlauf (300, 400) eines Lageistwerts als der wenigstens eine Antriebsparameter bestimmt wird (203).

7. Verfahren nach einem der vorstehenden Ansprüche, wobei der wenigstens eine Referenzwert bestimmt wird, indem ein Referenzschweißprozess an einem definierten Referenzwerkstück durchgeführt und ausgewertet wird (210).

8. Verfahren nach einem der vorstehenden Ansprüche, wobei der wenigstens eine Referenzwert bestimmt wird, indem eine Vielzahl von Schweißprozessen durchgeführt und ausgewertet wird.

9. Steuereinheit (140), die dazu eingerichtet ist, ein Verfahren nach einem der vorstehenden Ansprüche durchzuführen.

10. Schweißgerät (100) mit einem Elektrodenantrieb (130) und mit einer Steuereinheit (140) nach Anspruch 9.

11. Computerprogramm, das ein Schweißgerät (100) nach Anspruch 10 veranlasst, ein Verfahren nach einem der Ansprüche 1 bis 8 durchzuführen, wenn es auf der Steuereinheit (140) ausgeführt wird.

12. Maschinenlesbares Speichermedium mit einem darauf gespeicherten Computerprogramm nach Anspruch 11.
